# EUROPEAN PATENT SPECIFICATION

(11) **EP 3 408 118 B1**
(45) Date of publication and mention of the grant of the patent: **04.12.2019**
(21) Application number: 16708448.2
(22) Date of filing: 29.01.2016
(51) Int. Cl.: B60P 3/20, B60H 1/32, B60J 9/04, F24F 9/00, B65D 88/74, F25D 23/02, B60H 1/00

(54) **AIR CURTAIN SYSTEMS AND METHODS FOR CONTAINERS**
LUFTVORHANGSYSTEM UND VERFAHREN FÜR CONTAINER
SYSTÈMES ET PROCÉDÉS DE RIDEAU D'AIR DESTINÉS À DES CONTENEURS

(43) Date of publication of application: 05.12.2018
(73) Proprietor: Carrier Corporation, Farmington, CT 06032 (US)
(72) Inventor: STUMPF, André, 76520 Franqueville Saint Pierre (FR); RIVIERE, Cédric, 92500 Rueil-Malmaison (FR)
(74) Representative: Dehns
(86) International application number: PCT/IB2016/000152
(87) International publication number: WO 2017/130014

(56) References cited:
- WO-A1-2014/179013
- DE-U1- 20 201 148
- US-A- 5 809 799

## Description

### BACKGROUND

The subject matter disclosed herein generally relates to air curtain systems for containers and, more particularly, to dual direction air curtain systems and methods for refrigerated containers.

Transport refrigeration systems include cargo/shipping containers, trailers, and trucks. Each involves one or more refrigerated compartments and a refrigeration system positioned to cool a recirculating airflow within the compartment(s). Depending upon the implementation, refrigeration equipment may be mounted to an exterior of the container or within a subcompartment in the container. In some configurations, such as large trucks, the container may be a discrete box mounted atop the truck's frame. In smaller trucks, such as light commercial vehicles, the container may be formed within an existing body structure of the vehicle.

Many truck and trailer configurations mount the equipment to the front of the container, often high on the front wall so that the outlet for discharging cooled air into the compartment is near the compartment ceiling. Refrigerated containers, including trucks, may include systems for generating air curtains to maintain conditioned air within a container and to prevent warm air from entering the container when a door of the container is opened.

Such an air curtain system is shown in WO2014/179013A1.

### SUMMARY

According to a first aspect of the invention, an air curtain system for a container is provided. The air curtain system includes a host refrigeration unit, a first evaporator operably connected to the host refrigeration unit for positioning proximal to a door of the container, a second evaporator operably connected to the host refrigeration unit, a duct configured to house the first evaporator and the second evaporator, an intake fan configured to pull air from the container into the duct, and a damper configured proximal to the second evaporator. In a first mode of operation, the damper is open and air is directed through the second evaporator to supply cooled air to an interior of the container. In a second mode of operation, the damper is closed and air is directed through the first evaporator to generate an air curtain between the interior of the container and air external to the container.

In addition to one or more of the features described above, or as an alternative, further embodiments of the air curtain system may include that in the first mode of operation, air is directed through the first evaporator to supply cooled air to the interior of the container.

In addition to one or more of the features described above, or as an alternative, further embodiments of the air curtain system may include an air director configured to collimate air from the first evaporator downward next to the door.

In addition to one or more of the features described above, or as an alternative, further embodiments of the air curtain system may include that the second mode of operation includes a first sub-mode wherein the first evaporator is run continuously and a second sub-mode wherein the first evaporator is run in a start-stop manner.

In addition to one or more of the features described above, or as an alternative, further embodiments of the air curtain system may include that in the second mode of operation at least one of power and a refrigerant is directed away from the second evaporator.

In addition to one or more of the features described above, or as an alternative, further embodiments of the air curtain system may include an additional damper located proximal the first evaporator, wherein in the first mode of operation, the additional damper is closed and air is prevented from passing through the first evaporator.

In addition to one or more of the features described above, or as an alternative, further embodiments of the air curtain system may include that the second mode of operation is for use when the door to the container is opened.

In addition to one or more of the features described above, or as an alternative, further embodiments of the air curtain system may include that the container is configured as a trailer of a tractor-trailer system.

In addition to one or more of the features described above, or as an alternative, further embodiments of the air curtain system may include at least one of a cryogenic gas open loop or a compressed cycle refrigerant closed loop.

According to a second aspect of the invention, a method of generating an air curtain for a container, the container including an air curtain system having a first evaporator and a second evaporator, is provided. The method includes operating the air curtain system in a first mode of operation, wherein at least the second evaporator is operated to generate cool air within the container and detecting an opening of a door of the container and operating the air curtain system in a second mode of operation. The second mode of operation comprises disabling the second evaporator with a damper and generating an air curtain with the first evaporator. The method also includes detecting a closing of the door of the container and switching from the second mode of operation to the first mode of operation.

In addition to one or more of the features described above, or as an alternative, further embodiments of the method may include that disabling the second evaporator comprises closing a damper within the air curtain system.

In addition to one or more of the features described above, or as an alternative, further embodiments of the method may include that both the first evaporator and the second evaporator are operated in the first mode of operation.

In addition to one or more of the features described above, or as an alternative, further embodiments of the method may include that the second mode of operation includes a first sub-mode wherein the first evaporator is run continuously and a second sub-mode wherein the first evaporator is run in a start-stop manner.

In addition to one or more of the features described above, or as an alternative, further embodiments of the method may include that disabling the second evaporator further comprises at least one of diverting power away from the second evaporator or directing a refrigerant away from the second evaporator.

In addition to one or more of the features described above, or as an alternative, further embodiments of the method may include that the method is performed by an air curtain system and refrigeration unit of a tractor-trailer system.

Technical effects of embodiments of the present disclosure include an air curtain system configured to operate in at least two modes, wherein one mode provided cooled air to a container and another mode generates an efficient air curtain when a door of the container is opened. Further technical effects include operation of a damper within an air curtain system to prevent air from passing through one of two evaporators in the air curtain system.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1A is a schematic illustration of an exemplary embodiment of a prior art tractor-trailer system having a refrigeration unit and a cargo compartment;
FIG. 1B is a schematic view of an exemplary embodiment of a prior art refrigeration unit for a cargo compartment of the tractor-trailer system of FIG. 1A;
FIG. 2 is a schematic illustration of a tractor-trailer system incorporating an embodiment of the present invention.
FIG. 3A is a schematic illustration of an air curtain system in accordance with the present invention as operated in a first mode of operation;
FIG. 3B is a schematic illustration of the air curtain system of FIG. 3A as operated in a second mode of operation; and
FIG. 4 is a flow process for generating an air curtain in a container in accordance with an embodiment of the present invention.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

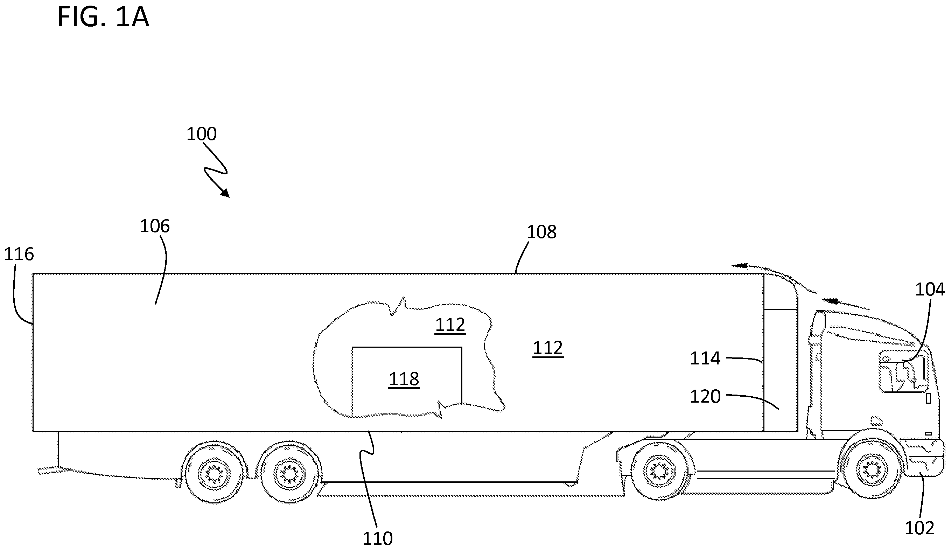

Shown in FIG. 1A is a schematic of an embodiment of a trailer system 100. The trailer system 100 includes a tractor 102 including an operator's compartment or cab 104 and also including an engine, which acts as the drive system of the trailer system 100. A container system 106 is coupled to the tractor 102. The container system 106 is a refrigerated trailer and includes a top wall 108, a directly opposed bottom wall 110, opposed side walls 112, and a front wall 114, with the front wall 114 being closest to the tractor 102. The container system 106 further includes a door or doors (not shown) at a rear wall 116, opposite the front wall 114. The walls of the container system 106 define a cargo space. The container system 106 is configured to maintain a cargo 118 located inside the cargo space at a selected temperature through the use of a refrigeration unit 120 located on or next to the container system 106. The refrigeration unit 120, as shown in FIG. 1A, is located at or attached to the front wall 114.

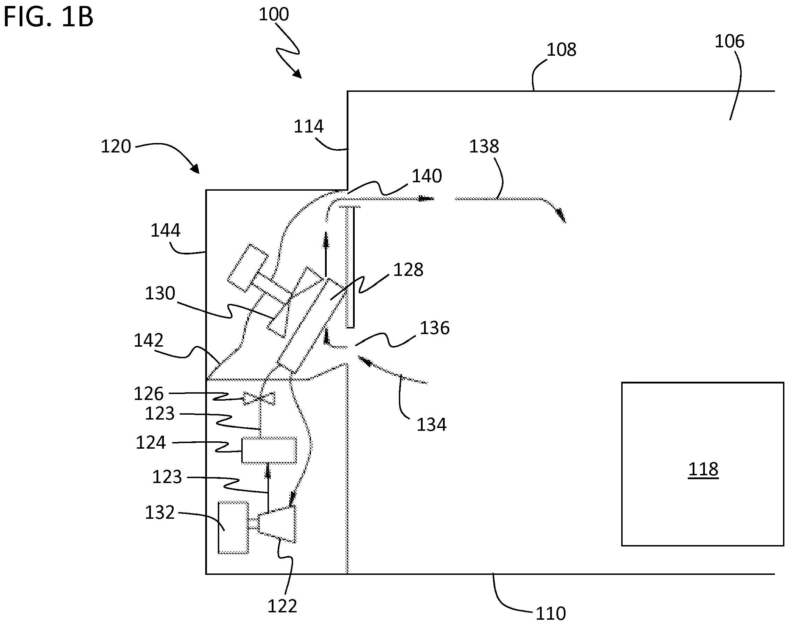

Referring now to FIG. 1B, the refrigeration unit 120 is shown in more detail. The refrigeration unit 120 includes a compressor 122, a condenser 124, an expansion valve 126, an evaporator 128, and an evaporator fan 130. The compressor 122 is operably connected to a refrigeration engine 132 which drives the compressor 122. The refrigeration engine 132 is connected to the compressor in one of several ways, such as a direct shaft drive, a belt drive, one or more clutches, and/or via an electrical generator. A refrigerant line 123 fluidly connects the components of the refrigeration unit 120.

Airflow is circulated into and through the cargo space of the container system 106 by means of the refrigeration unit 120. A return airflow 134 flows into the refrigeration unit 120 from the cargo space of the container system 106 through a refrigeration unit inlet 136, and across the evaporator 128 via the evaporator fan 130, thus cooling the return airflow 134 to a selected or predetermined temperature. The cooled return airflow 134, now referred to as supply airflow 138, is supplied into the cargo space of the container system 106 through a refrigeration unit outlet 140, which in some embodiments is located near the top wall 108 of the container system 106. The supply airflow 138 cools the cargo 118 in the cargo space of the container system 106. It is to be appreciated that the refrigeration unit 120 can further be operated in reverse to warm the container system 106 when, for example, the outside temperature is very low.

The refrigeration unit 120 is positioned in a frame 142 and contained in an accessible housing 144, with the frame 142 and/or the housing 144 secured to an exterior side of the front wall 114 such that the refrigeration unit 120 is positioned between the front wall 114 and the tractor 102, as shown in FIG. 1A.

It will be appreciated by those of skill in the art that the systems and configurations of FIGS. 1A and 1B are merely exemplary and provided for illustrative and descriptive purposes only. The disclosure is not limited thereby. For example, although a tractor-trailer configuration is shown, systems may be employed in other container configurations, in various truck configurations, and/or in other systems and configurations. Further, as will be appreciated by those of skill in the art, the container and cargo space may be configured as a sea container, and thus may be configured to stack with other containers and be shipped on a shipping vessel.

The refrigeration unit 120 may be configured as a host unit that is further configured to be operably connected to an air curtain system that is positioned proximal to a door or doors (not shown) at a rear wall 116. As such, the compressor 122 and the condenser 124 of the refrigeration (host) unit 120 may be configured to provide refrigerant to an air curtain unit, with fluid lines and/or other connectors that run along a ceiling or top wall 108 and/or the side walls 112 of the trailer of the container system 106. As used herein, a refrigerant may include, but is not limited to, a cryogenic gas, such as nitrogen or carbon dioxide. Further the system may be, in some embodiments, configured with a cryogenic gas open loop or a compressed cycle refrigerant closed loop.

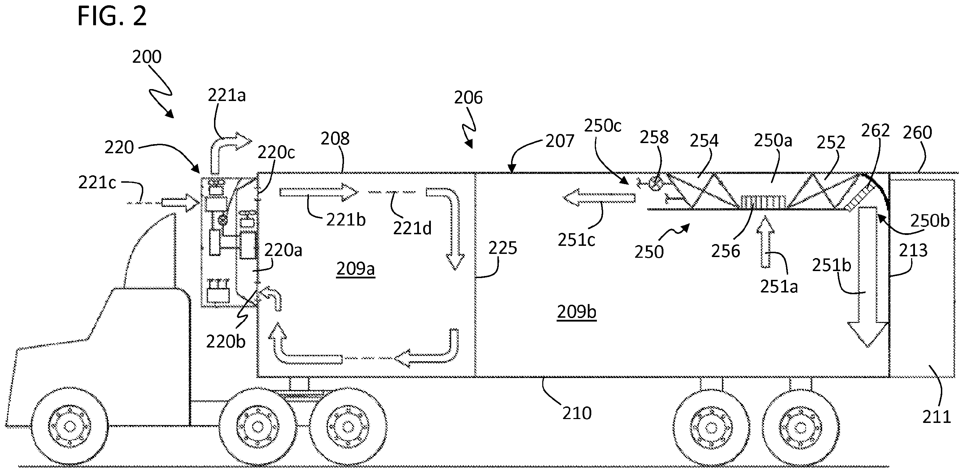

Turning now to FIG. 2, a trailer system 200 configured with an air curtain system in accordance with the present invention is shown. As shown, a container system 206 includes a container in the form of box 207 defining an interior 209 (shown as two subcompartments 209a and 209b). As shown, a door 211 (e.g., a roll-up door or a pair of side hinge doors) 211 is at a doorway 213 formed at a rear of the box 207. A host refrigeration unit 220 is located along a front of the box 207, the host refrigeration unit 220 being similar to refrigeration unit 120 of FIGS. 1A and 1B, described above.

An exemplary air flow across the condenser of the host refrigeration unit 220 is shown as 221a and an exemplary air flow across the evaporator of the host refrigeration unit 220 is shown as 221b. Flows 221a and 221b pass along respective flow paths 221c and 221d. In some embodiments, the host refrigeration unit 220 may also contain a power source such as an internal combustion engine driving an electric generator to, in turn, power the compressor, fan(s), and/or other components. In other embodiments, use of vehicle electric power may be employed. Further, in other embodiments, chemical or cryogenic systems with one or more heat rejection heat exchangers, positioned to cool the compartment or airflows in communication with the compartment may be used.

The box 207 may be formed of an insulated wall structure on the front, top wall 208, bottom wall 210, and side walls with the door(s) 211 also being insulated. One or more of the walls of the box 207 may include at least one penetration or aperture associated with the host refrigeration unit 220. For example, as shown, the host refrigeration unit 220 may define a duct 220a extending from a first port (an inlet) 220b low along a front wall of the box 207 to a second port (an outlet) 220c high along the front wall. Within the duct, along an air flow path may be configured the evaporator, associated fan(s), etc. of the host refrigeration unit 220.

As shown, a first subcompartment 209a is a forward subcompartment separated from a second subcompartment 209b by a physical barrier, divider, or partition wall 225 which may be in the form of a curtain or wall. In some non-limiting embodiments, the partition wall 225 may be configured as a movable partition wall (e.g., a lightweight insulated wall having a polyurethane foam core and glass fiber face sheets). Such a partition wall may include one or more doors (not shown) or may be moveable or openable (e.g., a hanging plastic or rubber curtain). The flow 221b is shown as a generally recirculating flow flowing from the outlet 220c along the underside of the top wall 208 and then downwardly along a surface of the partition wall 225, diverting forward along the bottom wall 210 and then back upward to the inlet 220b. This illustration is schematic. In actuality, there may be branches of these flows passing through gaps between various items stored in the first subcompartment 209a. As will be appreciated by those of skill in the art, the box 207 may define a single compartment (e.g., no partition wall 225 is present) and include both a host refrigeration unit 220 and an air curtain system 250 as provided herein.

The second subcompartment 209b may be configured with an air curtain system 250 having a first evaporator 252, a second evaporator 254, and a fan 256. There are various possible configurations for connecting the evaporators 252, 254 of the air curtain system 250 to the host refrigeration unit 220. In some embodiments, the evaporators 252, 254 may be configured in parallel with the evaporator of the host refrigeration unit 220. In other embodiments, the air curtain system evaporators 252, 254 may be configured in series with the evaporator of the host refrigeration unit 220. Further, in other examples, the evaporators 252, 254 may be configured with one or more expansion devices 258 (either located the host refrigeration unit 220 or local to the evaporators 252, 254, which may be configured along a line connecting the evaporators 252, 254 to the host refrigeration unit 220). Such configuration may be in parallel with the combination of an expansion device and evaporator of the host refrigeration unit 220. As such, the configuration shown and described is merely illustrative and for explanatory purposes and not intended to be limiting.

Air may enter the air curtain system 250 from within the second subcompartment 209b by operation of the fan 256, which may pull input or recycled air 251a upward into the air curtain system 250, as shown by the arrow. During operation of the air curtain system 250, in one mode of operation (e.g., when the doors 211 are closed), recycled air 251a may be pulled into a duct 250a and then pass through the first evaporator 252 and out a first outlet 250b of the air curtain system 250 to generate a first air flow 251b, which may be an air curtain that is directed downward from top wall 208. Simultaneously, air may also pass through the second evaporator 254 and out a second outlet 250c of the air curtain system 250 to generate a second air flow 251c, which may circulate within the box 207 (e.g., second subcompartment 209b). As such, both the first evaporator 252 and the second evaporator 254 may operate to provide cooling to the second subcompartment 209b.

In one example implementation, the two subcompartments 209a, 209b may be kept at different temperatures. For example, the first subcompartment 209a may be a frozen food compartment kept at a lower temperature than the second subcompartment 209b which may be a non-frozen perishables compartment. During this operation, host refrigeration unit 220 may be run to maintain a desired temperature in the first subcompartment 209a and the first and second evaporators 252, 254 of the air curtain system 250 may be operated to maintain a desired temperature in the second subcompartment 209b. In loading and unloading situations when the door 211 is opened, it may be desirable to minimize air exchange between air in the interior of the box 207 (e.g., second subcompartment 209b) and ambient/exterior air while maintaining cooling. As such, the air curtain system 250 may be configured to generate an air curtain that is configured to maximize the first air flow 251b to prevent air from leaving the box 207 and/or prevent exterior air from entering the box 207.

Accordingly, the air curtain system 250 may operate in at least two modes. In a first mode of operation, the first and second evaporators 252, 252 of the air curtain system 250 may be operated to provide first and second air flows 251b and 251c. The first mode of operation may be used when the door 211 is closed. When the door 211 is opened, the air curtain system 250 may switch to a second mode of operation. In the second mode, the second evaporator 254 may stop operating and the second air flow 251c from the second evaporator 254 may be prevented. Further, in the second mode, in some embodiments, all power may be diverted or directed to the first evaporator 252 to maximize generation of the first air flow 251b. According to the invention, as described in further detail below, a valve or damper is used to aid in maximizing air flow through the first evaporator 252 to generate the first air flow 251b.

FIG. 2 further shows an optional aerodynamic roof extension 260 which may help prevent exterior/ambient air from entering the box 207. FIG. 2 also shows an air director 262, which may be formed of a honeycomb material, located within the first outlet 250b of the air curtain system 250. The air director 262 may be configured to collimate the first air flow 251b, which may advantageously form an efficient and effective air curtain.

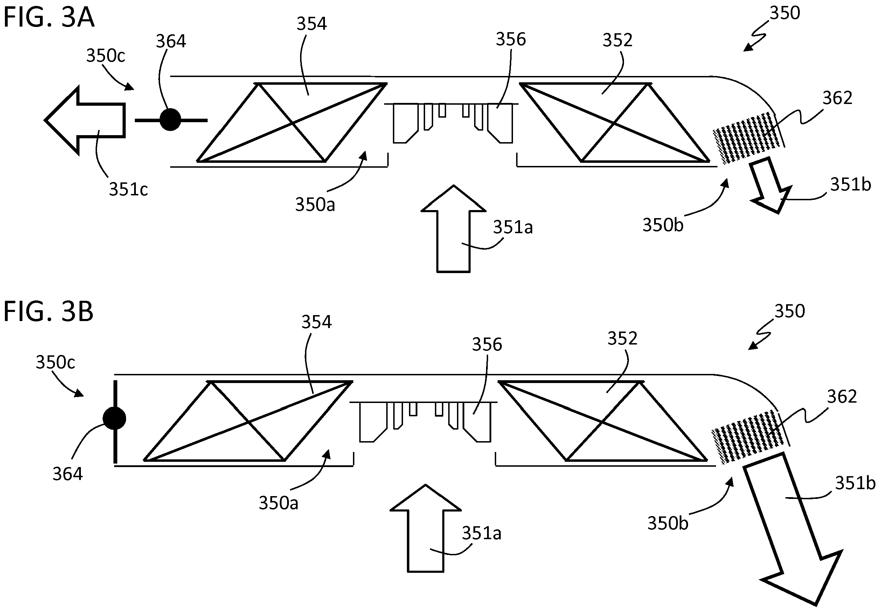

Turning now to FIGS. 3A and 3B, schematic illustrations of an air curtain system in accordance with an embodiment of the present disclosure is shown. The air curtain system 350 may be similar to that shown and described above, and may have connections to a host refrigeration unit (not shown), as described above. The air curtain system 350 includes a duct 350a that may house the components of the air curtain system 350 and may be configured to enable air flow direction and control within and through the air curtain system 350.

Recycled air 351a may be pulled into the duct 350a through a fan 356. The recycled air 351a may be pulled into the duct 350a from a container and may be cool air that has been cooled by operation of first and second evaporators 352, 354. Cool air may be distributed from the first and second evaporators 352, 354 as a second air flow 351c (from second evaporator 354) out a second outlet 350c and a first air flow 351b (from first evaporator 352) out a first outlet 350b, when the air curtain system 350 is operated in a first mode (FIG. 3A). The fan 356 may be sufficiently powerful to supply a sufficient air flow velocity to supply and generate both the second air flow 351c and the first air flow 351b. The fan 356 may be configured to blow directly upward into the duct 350a and the air then distributes to both the first and second evaporators 352, 354. In some embodiments, the fan 356 may include multiple fans and/or air flow directors that may direct air to one or both of the first and second evaporators 352, 354.

The air curtain system 350 includes a damper 364 located proximal to the second evaporator 354. In FIG. 3A, the damper 364 is open and enabled the second air flow 351c to be generated and pass from the second outlet 250c. As shown, the damper 364 is located in the second outlet 350c, opposite the second evaporator 354 from the fan 356. However, in other embodiments, the damper 364 may be located within the duct 350a between the second evaporator 354 and the fan 356. In the first mode of operation, the first evaporator 352 is operated and cools air that flows out of the first outlet 350b through an air director 362, such as a honeycomb structure configured for collimating the first air flow 351b.

Turning now to FIG. 3B, the air curtain system 350 is shown in a second mode of operation. As shown, the damper 364 is closed, which prevents formation of the second air flow 351c from the second evaporator 354. Instead, all air pulled into the duct 350a by the fan 356 is directed through the first evaporator 352 and through the air director 362 to generate the first air flow 351b (shown as a larger arrow than that of FIG. 3A, indicating a stronger air flow in the second mode of operation). In the second mode of operation, in some embodiments, in addition to having the damper 364 in a closed position, power and/or refrigerant may be diverted away from the second evaporator 354 and all power and/or refrigerant of the air curtain system 350 may be diverted and directed to the first evaporator 352.

As noted, the air curtain system is operated in the first mode (FIG. 3A) when a door to a container is closed and operated in the second mode (FIG. 3B) when the door is opened. In the first mode of operation, the air within the container may be temperature controlled, receiving cooled air from both the first evaporator 352 and the second evaporator 354. However, in the second mode of operation, when the second evaporator 354 is prevented from generating a cooled air flow (by closing the damper 364 and/or stopping power/operation of the second evaporator 354), an efficient first air flow 351b (e.g., an efficient air curtain) is generated from the first evaporator 352.

In some embodiments, the second mode of operation may include two sub-modes. A first sub-mode may be a cold chain performance, wherein the compressor of the host refrigeration unit is operated and the first air flow 351b is a cold or chilled-air air curtain. The cold chain performance sub-mode may maintain the cold chain of a refrigerated container. A second sub-mode may be an energy saving or economy mode, wherein the compressor of the host refrigeration unit is not operated and high energy performance may be employed to generated a powerful air curtain and at the same time energy consumption may be reduced as compared to the cold chain performance sub-mode. In some embodiments, in the cold chain performance sub-mode, the first evaporator 352 may be operated in a continuous manner such that the air passed through the first evaporator 352 may be continuously cooled. Further, in some embodiments, in the economy sub-mode, the first evaporator 352 may be run either continuously or may be operated in a start-stop manner, which may provide additional energy savings.

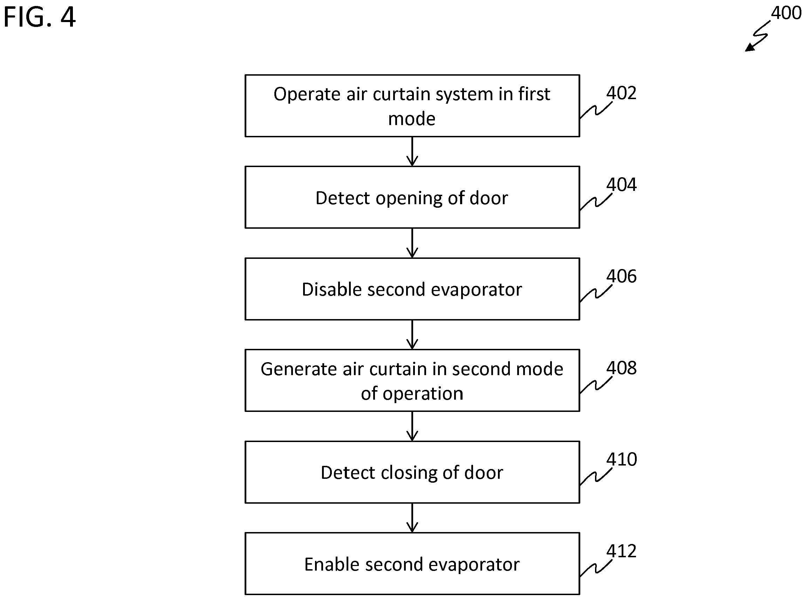

Turning now to FIG. 4, a flow process for operating an air curtain system in accordance with an embodiment of the present disclosure is shown. Flow process 400 may be employed with an air curtain system similar to that shown and described above. The air curtain system may include first and second evaporators, a single input fan, and a damper configured with respect to the second evaporator that is operable between an open and a closed position.

At block 402, the air curtain system may be operated in a first mode of operation wherein the first evaporator and the second evaporator are run to generate a first air flow and a second air flow, respectively. The first air flow may be directed by an air flow director to flow downward from a top wall of a container in front of or proximate to a door or door opening of a container. The second air flow may be directed to flow into a space of a container to provide cooling to the space. In some embodiments, the first and second evaporators may be positioned on opposing sides of an intake fan of the air curtain system. A damper may be positioned with respect to the second evaporator and may be in an open position when the air curtain system is operated in the first mode (block 402).

At block 404, the air curtain system may detect an opening of a door of the container. The detection may be mechanical and/or electrical. In some embodiments, the detection may be provided by a signal received from a device connected to the door. In other embodiments, a mechanical switch may be triggered by movement of the doors when opened. Those of skill in the art will appreciate that there are many ways for the air curtain system to change modes of operation when the container doors are opened, and the present disclosure is not limited to any particular mechanism.

When the doors are detected to be opened, the air curtain system is configured to disable the second evaporator of the air curtain system, as shown at block 406. The act of disabling may include closing of a damper or valve that prevents the generation and/or formation of a second air flow from the second evaporator. The disabling may further include diverting power and/or refrigerant away from the second evaporator.

At block 408, an air curtain may be generated from the first evaporator. That is, all air pulled into the air curtain system by the intake fan may be directed through the first evaporator and out an associated outlet to form an air curtain that spans the opening of the doors. In some embodiments, a honeycomb air director may be configured within the outlet of the air curtain system proximal to the first evaporator, with the air director configured to collimate the airflow to generate an efficient air curtain at the door opening. During generation of the air curtain from the first evaporator, the air curtain system may (optionally) be operated in a continuous, cold chain performance sub-mode or an economy mode wherein a compressor of a host refrigeration unit is not used, thus providing power savings.

At block 410, the air curtain system may detect that the door to the container is closed. This may be accomplished in the same (or reverse) manner as detection of opening the door.

At block 412, the second evaporator may be enabled, providing cooling into the container.

As will be appreciated by those of skill in the art, in view of the above description, the first mode of operation may be represented in blocks 402 and 412 of flow process 400 and the second mode of operation may be represented in blocks 406 and 408 of flow process 400. Blocks 404 and 410 may be the step that provides the transition from one mode of operation to another.

In some embodiments, a timer or temperature sensors may be employed within the air curtain system. For example, to use the air curtain only during times for which it may be efficient, a timer is added or a delta temperature outside/inside could be used in a control logic of the air curtain system. That is, sensors and/or timers may be used to enable an efficient use of the air curtain system and generation of the air curtain.

Further, in some embodiments, an additional damper may be positioned relative to the first evaporator such that, in the first mode of operation, the first evaporator is prevented from generating an air curtain, and all air is directed through the second evaporator. In some such embodiments, the additional damper may be positioned between the fan and the first evaporator. In other such embodiments, the additional may be positioned between the first evaporator and the air director. Further, in some such embodiments, in the first mode of operation, the first evaporator may have power and/or refrigerant directed away from the first evaporator and to the second evaporator, to thus maximize the cooling flow generated by the second evaporator.

Advantageously, embodiments described herein provide an air curtain system that employs two evaporators and a single intake fan, which, as configured, is not required to have reverse-fan technology. That is, in accordance with embodiments provided herein, the intake fan may also direct air in a single direction (e.g., upward into a duct of the air curtain system). Advantageously, the inclusion of a damper or valve within the system enables a single-direction fan, while providing an efficient and effective air curtain at an opening of a refrigerated container. Moreover, a two-evaporator configuration may enable a low-profile cooling and/or air curtain system. That is, because two separate evaporators may be used, a slim or low physical profile as extending from a top wall or roof of a container may be achieved.

Further, advantageously, embodiments as provided herein enable limiting temperature increases within a refrigerated container during door opening (e.g., loading and/or unloading from the container). Further, advantageously, air curtain systems as provided herein may provide reduced power consumption.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

For example, although shown and described with respect to a container of a trailer configuration, those of skill in the art will appreciate that air curtain systems as provided herein may be used in various types of containers and/or cold chain enclosures, and thus the present disclosure is not limited to the embodiments shown and described.

Accordingly, the present invention is not to be seen as limited by the foregoing description, but is only limited by the scope of the appended claims.

## Claims

1. An air curtain system (250) for a container (106) comprising:
a host refrigeration unit (220);
a first evaporator (252) operably connected to the host refrigeration unit for positioning proximal to a door (211) of the container;
**characterised by**:
a second evaporator (254) operably connected to the host refrigeration unit;
a duct (350a) configured to house the first evaporator and the second evaporator;
an intake fan (256) configured to pull air from the container into the duct; and
a damper (364) configured proximal to the second evaporator,
wherein, in a first mode of operation, the damper is open and air is directed through the second evaporator to supply cooled air to an interior of the container, and
wherein, in a second mode of operation, the damper is closed and air is directed through the first evaporator to generate an air curtain between the interior of the container and air external to the container.

2. The air curtain system (250) of claim 1, wherein in the first mode of operation, air is directed through the first evaporator (252) to supply cooled air to the interior of the container.

3. The air curtain system (250) of any of claims 1-2, further comprising an air director (262) configured to collimate air from the first evaporator (252) downward next to the door (211).

4. The air curtain system (250) of any of claims 1-3, wherein the second mode of operation includes a first sub-mode wherein the first evaporator (252) is run continuously and a second sub-mode wherein the first evaporator is run in a start-stop manner.

5. The air curtain system (250) of any of claims 1-4, wherein in the second mode of operation at least one of power and a refrigerant is directed away from the second evaporator (254).

6. The air curtain system (250) of any of claims 1-5, further comprising an additional damper located proximal the first evaporator (252), wherein in the first mode of operation, the additional damper is closed and air is prevented from passing through the first evaporator.

7. The air curtain system (250) of any of claims 1-6, wherein the second mode of operation is for use when the door (211) to the container (106) is opened.

8. The air curtain system (250) of any of claims 1-7, wherein the container (106) is configured as a trailer of a tractor-trailer system.

9. The air curtain system (250) of any of claims 1-8, further comprising at least one of a cryogenic gas open loop or a compressed cycle refrigerant closed loop.

10. A method of generating an air curtain for a container (106), the container including an air curtain system (250) having a first evaporator (252) and a second evaporator (254), the method comprising:
operating the air curtain system in a first mode of operation, wherein at least the second evaporator is operated to generate cool air within the container;
detecting an opening of a door (211) of the container and operating the air curtain system in a second mode of operation, wherein the second mode of operation comprises:
disabling the second evaporator with a damper (364); and
generating an air curtain with the first evaporator;
detecting a closing of the door of the container; and
switching from the second mode of operation to the first mode of operation.

11. The method of claim 10, wherein disabling the second evaporator (254) comprises closing a damper (364) within the air curtain system (250).

12. The method of any of claims 10-11, wherein both the first evaporator (252) and the second evaporator (254) are operated in the first mode of operation.

13. The method of any of claims 10-12, wherein the second mode of operation includes a first sub-mode wherein the first evaporator (252) is run continuously and a second sub-mode wherein the first evaporator is run in a start-stop manner.

14. The method of any of claims 10-13, wherein disabling the second evaporator (254) further comprises at least one of diverting power away from the second evaporator or directing a refrigerant away from the second evaporator.

15. The method of any of claims 10-14, the method performed by an air curtain system (250) and refrigeration unit (220) of a tractor-trailer system.

## Patentansprüche

1. Luftvorhangsystem (250) für einen Container (106), Folgendes umfassend:
ein Hauptkühlaggregat (220);
einen Verdampfer (252), der mit dem Hauptkühlaggregat wirkverbunden ist, zur Positionierung proximal zu einer Tür (211) des Containers;
**gekennzeichnet durch**:
einen zweiten Verdampfer (254), der mit dem Hauptkühlaggregat wirkverbunden ist;
einen Kanal (350a), der dazu konfiguriert ist, den ersten Verdampfer und den zweiten Verdampfer aufzunehmen;
ein Ansauggebläse (256), das dazu konfiguriert ist, Luft von dem Container in den Kanal zu saugen; und
einen Dämpfer (364), der proximal zum zweiten Verdampfer konfiguriert ist,
wobei der Dämpfer in einem ersten Betriebsmodus offen ist und Luft durch den zweiten Verdampfer geleitet wird, um einem Inneren des Containers gekühlte Luft zuzuführen, und
wobei der Dämpfer in einem zweiten Betriebsmodus geschlossen ist und Luft durch den ersten Verdampfer geleitet wird, um einen Luftvorhang zwischen dem Inneren des Containers und Luft außerhalb des Containers zu erzeugen.

2. Luftvorhangsystem (250) nach Anspruch 1, wobei im ersten Betriebsmodus Luft durch den ersten Verdampfer (252) geleitet wird, um dem Inneren des Containers gekühlte Luft zuzuführen.

3. Luftvorhangsystem (250) nach einem der Ansprüche 1 bis 2, ferner umfassend einen Luftleiter (262), der dazu konfiguriert ist, Luft von dem ersten Verdampfer (252) neben der Tür (211) nach unten zu kollimieren.

4. Luftvorhangsystem (250) nach einem der Ansprüche 1 bis 3, wobei der zweite Betriebsmodus einen ersten Untermodus, in dem der erste Verdampfer (252) kontinuierlich läuft, und einen zweiten Untermodus, in dem der erste Verdampfer in einem Start-Stopp-Betrieb läuft, beinhaltet.

5. Luftvorhangsystem (250) nach einem der Ansprüche 1 bis 4, wobei im zweiten Betriebsmodus mindestens eines von Leistung und einem Kühlmittel von dem zweiten Verdampfer (254) weggeleitet wird.

6. Luftvorhangsystem (250) nach einem der Ansprüche 1 bis 5, ferner umfassend einen zusätzlichen Dämpfer, der sich proximal zum ersten Verdampfer (252) befindet, wobei der zusätzliche Dämpfer im ersten Betriebsmodus geschlossen ist und Luft daran gehindert wird, durch den ersten Verdampfer zu fließen.

7. Luftvorhangsystem (250) nach einem der Ansprüche 1 bis 6, wobei der zweite Betriebsmodus verwendet wird, wenn die Tür (211) zum Container (106) geöffnet ist.

8. Luftvorhangsystem (250) nach einem der Ansprüche 1 bis 7, wobei der Container (106) als Auflieger eines Sattelschleppersystems konfiguriert ist.

9. Luftvorhangsystem (250) nach einem der Ansprüche 1 bis 8, ferner umfassend mindestens eines von einem offenen Regelkreis eines Tieftemperaturgases oder einem geschlossenen Regelkreis eines komprimierten Kreislauf-Kühlmittels.

10. Verfahren zum Erzeugen eines Luftvorhangsystems für einen Container (106), wobei der Container ein Luftvorhangsystem (250) mit einem ersten Verdampfer (252) und einem zweiten Verdampfer (254) beinhaltet, wobei das Verfahren Folgendes umfasst:
Betreiben des Luftvorhangsystems in einem ersten Betriebsmodus, wobei mindestens der zweite Verdampfer betrieben wird, um kühle Luft in dem Container zu erzeugen;
Erfassen eines Öffnens einer Tür (211) des Containers und Betreiben des Luftvorhangsystems in einem zweiten Betriebsmodus, wobei der zweite Betriebsmodus Folgendes umfasst:
Deaktivieren des zweiten Verdampfers mit einem Dämpfer (364); und
Erzeugen eines Luftvorhangs mit dem ersten Verdampfer;
Erkennen eines Schließens der Tür des Containers; und
Wechseln vom zweiten Betriebsmodus zu dem ersten Betriebsmodus.

11. Verfahren nach Anspruch 10, wobei das Deaktivieren des zweiten Verdampfers (254) Schließen des Dämpfers (364) im Luftvorhangsystem (250) umfasst.

12. Verfahren nach einem der Ansprüche 10 bis 11, wobei sowohl der erste Verdampfer (252) als auch der zweite Verdampfer (254) in dem ersten Betriebsmodus betrieben werden.

13. Verfahren nach einem der Ansprüche 10 bis 12, wobei der zweite Betriebsmodus einen ersten Untermodus, in dem der erste Verdampfer (252) kontinuierlich läuft, und einen zweiten Untermodus, in dem der erste Verdampfer in einem Start-Stopp-Betrieb läuft, beinhaltet.

14. Verfahren nach einem der Ansprüche 10 bis 13, wobei das Deaktivieren des zweiten Verdampfers (254) ferner mindestens eines davon umfasst, dass Leistung vom zweiten Verdampfer weggelenkt wird oder ein Kühlmittel von dem zweiten Verdampfer weggeleitet wird.

15. Verfahren nach einem der Ansprüche 10 bis 14, wobei das Verfahren von einem Luftvorhangsystem (250) und einem Kühlaggregat (220) eines Sattelschleppersystems durchgeführt wird.

## Revendications

1. Système de rideau d'air (250) pour un conteneur (106) comprenant :
une unité de réfrigération hôte (220) ;
un premier évaporateur (252) relié de manière opérationnelle à l'unité de réfrigération hôte pour un positionnement à proximité d'une porte (211) du conteneur ;
**caractérisé par** :
un second évaporateur (254) relié de manière opérationnelle à l'unité de réfrigération hôte ;
un conduit (350a) configuré pour loger le premier évaporateur et le second évaporateur ;
un ventilateur d'admission (256) configuré pour aspirer l'air du conteneur dans le conduit ; et
un amortisseur (364) configuré à proximité du second évaporateur,
dans lequel, dans un premier mode de fonctionnement, l'amortisseur est ouvert et de l'air est dirigé à travers le second évaporateur pour fournir de l'air refroidi à l'intérieur du conteneur, et
dans lequel, dans un second mode de fonctionnement, l'amortisseur est fermé et de l'air est dirigé à travers le premier évaporateur pour générer un rideau d'air entre l'intérieur du conteneur et l'air externe au conteneur.

2. Système de rideau d'air (250) selon la revendication 1, dans lequel, dans le premier mode de fonctionnement, de l'air est dirigé à travers le premier évaporateur (252) pour fournir de l'air refroidi à l'intérieur du conteneur.

3. Système de rideau d'air (250) selon l'une quelconque des revendications 1 à 2, comprenant en outre un directeur d'air (262) configuré pour collimater de l'air du premier évaporateur (252) vers le bas à côté de la porte (211).

4. Système de rideau d'air (250) selon l'une quelconque des revendications 1 à 3, dans lequel le second mode de fonctionnement comporte un premier sous-mode dans lequel le premier évaporateur (252) fonctionne en continu et un second sous-mode dans lequel le premier évaporateur fonctionne en mode marche/arrêt.

5. Système de rideau d'air (250) selon l'une quelconque des revendications 1 à 4, dans lequel, dans le second mode de fonctionnement, au moins l'un de la puissance et d'un réfrigérant est dirigé loin du second évaporateur (254).

6. Système de rideau d'air (250) selon l'une quelconque des revendications 1 à 5, comprenant en outre un amortisseur supplémentaire situé à proximité du premier évaporateur (252), dans lequel, dans le premier mode de fonctionnement, l'amortisseur supplémentaire est fermé et l'air ne peut pas passer à travers le premier évaporateur.

7. Système de rideau d'air (250) selon l'une quelconque des revendications 1 à 6, dans lequel le second mode de fonctionnement est destiné à être utilisé lorsque la porte (211) du conteneur (106) est ouverte.

8. Système de rideau d'air (250) selon l'une quelconque des revendications 1 à 7, dans lequel le conteneur (106) est configuré en tant que remorque d'un système de semi-remorque.

9. Système de rideau d'air (250) selon l'une quelconque des revendications 1 à 8, comprenant en outre au moins l'une d'une boucle ouverte de gaz cryogénique ou d'une boucle fermée de réfrigérant à cycle comprimé.

10. Procédé de génération d'un rideau d'air pour un conteneur (106), le conteneur comportant un système de rideau d'air (250) ayant un premier évaporateur (252) et un second évaporateur (254), le procédé comprenant :
le fonctionnement du système de rideau d'air dans un premier mode de fonctionnement, dans lequel au moins le second évaporateur fonctionne pour générer de l'air froid à l'intérieur du conteneur ;
la détection d'une ouverture d'une porte (211) du conteneur et le fonctionnement du système de rideau d'air dans un second mode de fonctionnement, dans lequel le second mode de fonctionnement comprend :
la désactivation du second évaporateur avec un amortisseur (364) ; et
la génération d'un rideau d'air avec le premier évaporateur ;
la détection d'une fermeture de la porte du conteneur ; et
la commutation du second mode de fonctionnement au premier mode de fonctionnement.

11. Procédé selon la revendication 10, dans lequel la désactivation du second évaporateur (254) comprend la fermeture d'un amortisseur (364) à l'intérieur du système de rideau d'air (250) .

12. Procédé selon l'une quelconque des revendications 10 à 11, dans lequel le premier évaporateur (252) et le second évaporateur (254) fonctionnent dans le premier mode de fonctionnement.

13. Procédé selon l'une quelconque des revendications 10 à 12, dans lequel le second mode de fonctionnement comporte un premier sous-mode dans lequel le premier évaporateur (252) fonctionne en continu et un second sous-mode dans lequel le premier évaporateur fonctionne en mode marche/arrêt.

14. Procédé selon l'une quelconque des revendications 10 à 13, dans lequel la désactivation du second évaporateur (254) comprend en outre au moins l'un de la déviation de l'énergie du second évaporateur ou de l'orientation d'un réfrigérant loin du second évaporateur.

15. Procédé selon l'une quelconque des revendications 10 à 14, le procédé étant exécuté par un système de rideau d'air (250) et une unité de réfrigération (220) d'un système de semi-remorque.
